## Europäisches Patentamt
## European Patent Office
## Office européen des brevets

(19)

(11) Numéro de publication : **0 015 858**
**B1**

(12)

# FASCICULE DE BREVET EUROPÉEN

(45) Date de publication du fascicule du brevet :
07.04.82

(51) Int. Cl.³ : **F 16 B   5/07**, F 16 B 17/00,
E 01 C   9/08

(21) Numéro de dépôt : 80420025.1

(22) Date de dépôt : 28.02.80

(54) **Perfectionnement aux assemblages en queue d'aronde.**

(30) Priorité : 28.02.79 FR 7905680

(43) Date de publication de la demande :
17.09.80 (Bulletin 80/19)

(45) Mention de la délivrance du brevet :
07.04.82 Bulletin 82/14

(84) Etats contractants désignés :
AT BE CH DE GB IT LU NL SE

(56) Documents cités :
FR - A - 2 178 415
FR - A - 2 194 852
CH - A - 455 536
US - A - 3 452 959

(73) Titulaire : ALLIBERT EXPLOITATION Société anonyme dite:
129, avenue Léon Blum
F-38100 Grenoble, Isère (FR)

(72) Inventeur : Rech, Jacques
16, avenue des Chênes
F-78150 Le Chesnay (FR)

(74) Mandataire : Maureau, Bernard et al
Cabinet GERMAIN & MAUREAU Le Britannia - Tour C
20, Boulevard Eugène Déruelle
F-69003 Lyon (FR)

EP 0 015 858 B1

Imprimerie Jouve, 18, rue St-Denis, 75001 Paris, France

Perfectionnement aux assemblages en queue d'aronde

L'invention a pour objet un perfectionnement apporté aux assemblages en queue d'aronde, notamment lorsqu'ils sont appliqués à des pièces en matière plastique.

Les assemblages en queue d'aronde sont largement utilisés dans des domaines très divers ; et c'est ainsi notamment qu'on y recourt pour lier entre eux des éléments de forme polygonale dont les différents côtés sont munis soit d'éléments mâles, soit d'éléments femelles. Ce mode d'assemblage est commode et efficace, mais il impose des conditions déterminées d'utilisation des divers éléments, ce qui, en cas d'extension des possibilités d'utilisation, nécessite de disposer d'un nombre d'éléments supérieur à celui effectivement utilisé et de disposer d'éléments supplémentaires dont les organes d'assemblage sont mâles pour les uns et femelles pour les autres.

Pour illustrer le problème qui est à la base de l'invention, il en est ainsi par exemple des caillebotis constitués par des éléments en matière plastique, de forme carrée, comportant des organes d'assemblage mâles sur deux faces adjacentes et des organes d'assemblage femelles sur leurs deux autres faces. Un caillebotis constitué de tels éléments présente ainsi sur chacun de ses bords soit des organes mâles, soit des organes femelles. Pour prolonger l'un des bords de ce caillebotis par des éléments en plan incliné, facilitant l'accès de chariots ou autres engins roulants, il est donc nécessaire de disposer de tels éléments munis d'organes complémentaires, soit femelles, soit mâles.

Il en résulte des inconvénients : volume de stockage et coût d'éléments dont certains s'avèrent inutiles, inconvénients auxquels l'invention remédie.

Elle a pour objet un système d'assemblage consistant en combinaison en un organe d'assemblage comportant un évidement en queue d'aronde et en un organe mâle intérieur qui est logé dans cet évidement, présente une forme de T et, grâce à ses dimensions et à son profil, est susceptible de coopérer avec un organe femelle d'un autre élément et est susceptible de séparation afin de permettre la coopération de l'organe d'assemblage avec un organe mâle d'un autre élément.

L'invention sera bien comprise à l'aide de la description qui suit, en référence au dessin schématique annexé représentant, à titre d'exemple non limitatif, une forme d'exécution de ce système d'assemblage, dans le cas particulier d'un caillebotis muni d'éléments lui servant de rampe d'accès :

Figure 1 est une vue d'ensemble en perspective d'une partie de ce caillebotis, dans laquelle l'un des éléments servant de rampe d'accès a été représenté dégagé vers le haut ;

Figure 2 est, à plus grande échelle, une vue en coupe horizontale montrant cet élément dans l'une de ses zones où il comporte un système d'assemblage conforme à l'invention.

Figure 3 est une vue analogue à celle de la figure 2, mais après la séparation de l'organe mâle intérieur selon l'invention.

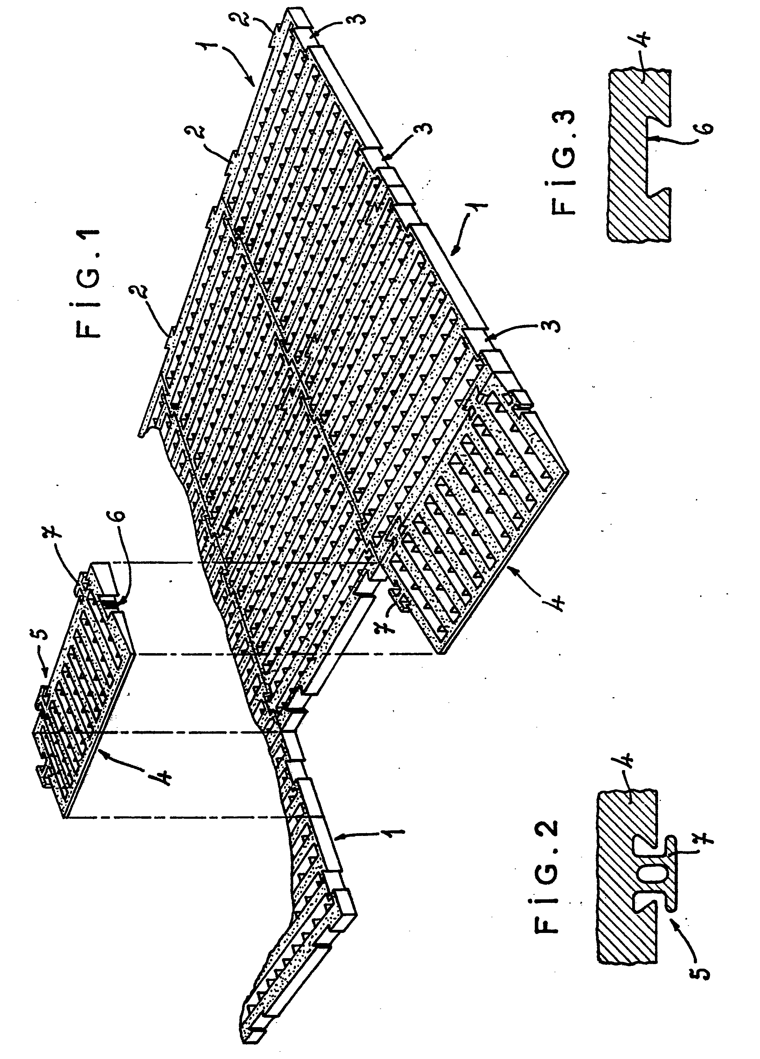

La figure 1 représente un caillebotis constitué par une pluralité d'éléments (1) en matière plastique liés entre eux par des assemblages en queue d'aronde. Chacun de ces éléments (1) est plan et de forme carrée ; il est avantageusement constitué en matière plastique moulée ; et il présente sur chacun de ses bords, soit deux organes mâles (2) d'assemblage, soit deux organes femelles (3) complémentaires. Les organes mâles (2) sont situés sur deux faces adjacentes de chaque élément ; et les organes femelles (3) sont situés sur les deux autres faces adjacentes. Il est ainsi possible, grâce à ce système d'assemblage en queue d'aronde constitué par les organes mâles (2) et par les organes femelles (3), d'assembler entre eux les éléments (1), comme le montre la figure 1 et comme cela est d'ailleurs connu en soi.

Considérant que comme le montre la figure 1, les bords du caillebotis ainsi formé présentent, soit des organes mâles (2), soit des organes femelles (3), il est évident que si l'on désire prolonger le caillebotis au moyen d'éléments complémentaires en plan incliné formant rampe d'accès, il est nécessaire que ces éléments inclinés soient munis, sur leurs bords d'assemblage au caillebotis, soit d'éléments femelles, soit d'éléments mâles, suivant que le bord correspondant du caillebotis présente soit des éléments mâles, soit des éléments femelles.

En donnant aux éléments inclinés (4) l'agencement qui fait l'objet de l'invention, il est possible d'utiliser dans tous les cas les mêmes éléments. Ces éléments inclinés (4) présentent à cet effet, sur les deux bords en pente et sur leur bord le plus haut, des organes d'assemblage (5) qui sont susceptibles de se comporter soit comme éléments femelles, soit comme éléments mâles, suivant qu'ils sont appelés à coopérer avec des éléments mâles (2) ou avec des éléments femelles (3).

Chacun de ces organes d'assemblage (5), dans ce but, comporte un évidement (6) dont les dimensions et la forme sont identiques aux organes femelles (3) prévus sur les éléments normaux (1) du caillebotis ; et cet évidement (6), qui est appelé dans certains cas à jouer le rôle d'organe femelle, présente la particularité de comporter un organe mâle intérieur (7). Cet organe (7) présente une forme générale de T, dont l'âme est reliée à la partie médiane de l'évidement (6). Cet organe mâle intérieur (7) est profilé et dimensionné pour pouvoir coopérer avec l'un quelconque des organes femelles (3) des éléments normaux (1) du caillebotis ; et il est à noter que la liaison entre l'organe mâle intérieur (7) et l'évidement (6) est faite dans des conditions telles qu'il puisse être facilement destructible, afin de pouvoir utiliser chaque organe d'assemblage (5) de chaque élément incliné (4), soit comme élément mâle, soit comme élément femelle.

Dans le cas représenté à la figure 1, le caillebotis est équipé de deux éléments inclinés (4) servant de rampe d'accès ; et ces deux éléments (4) doivent être liés, non seulement entre eux, mais aussi avec les éléments normaux (1) du caillebotis. Or, ces éléments normaux (1) présentent, en regard des éléments inclinés (4), des bords comportant des organes femelles (3). Il est donc nécessaire d'utiliser les organes mâles intérieurs (7) des deux éléments inclinés (4) pour permettre leur liaison avec les organes femelles (3) des éléments normaux (1). Par contre, les deux éléments inclinés (4) ne peuvent pas être assemblés entre eux sans transformation, étant donné que sur leurs trois faces d'assemblage ils comportent des organes mâles intérieurs (7). La liaison entre les deux éléments inclinés (4) est néanmoins possible ; il suffit en effet de détruire l'un des organes mâles intérieurs (7), comme cela est représenté à la figure 1 pour l'élément incliné (4) qui se trouve dégagé vers le haut. Le bord correspondant de l'élément incliné (4) présente alors, en regard de l'autre élément incliné (4), non plus un organe mâle, mais un organe femelle c'est-à-dire l'écartement (6) qui coopérera avec l'organe mâle intérieur correspondant (7) de l'élément incliné (4) voisin.

Comme il va de soi, l'invention ne se limite pas à la seule forme d'exécution de ce système d'assemblage en queue d'aronde qui a été ci-dessus indiquée à titre d'exemple ; elle en embrasse, au contraire, toutes les variantes de réalisation et d'application.

**Revendications**

1. Système d'assemblage en queue d'aronde pour éléments (1) en matière plastique de forme polygonale, dont les côtés comportent les uns des organes mâles (2) et les autres des organes femelles (3) en queue d'aronde, caractérisé en ce que certains éléments (4) présentent au moins un organe d'assemblage (5) comportant un évidement (6) en queue d'aronde et un organe mâle intérieur (7) qui est logé dans cet évidement (6) et présente une forme de T et, grâce à ses dimensions et à son profil, est susceptible de coopérer avec un organe femelle (3) d'un autre élément et est susceptible de séparation afin de permettre la coopération de l'organe d'assemblage (5) avec un organe mâle (2) d'un autre élément (1).

2. Caillebotis constitué d'une part par des éléments normaux (1) en matière plastique, plans et de forme carrée, liés entre eux par des organes mâles (2) et femelles (3) en queue d'aronde aménagés sur leurs bords, et d'autre part par des éléments inclinés (4) formant rampe d'accès et comportant un système d'assemblage selon la revendication 1, caractérisé en ce que chaque élément incliné (4) présente, sur chacun de ses deux bords en pente et sur son bord le plus haut, au moins un organe d'assemblage (5) constitué par un évidement (6) en queue d'aronde contenant un organe mâle intérieur (7) en forme de T qui lui est lié, de façon destructible, à la base de cet évidement (6).

**Claims**

1. Assembly system with dovetail joints for polygonal units (1) of plastics material, some sides of which include male members (2) and the other sides female members (3) of dovetail form, characterised in that certain units (4) have at least one assembly member (5) including a dovetail socket (6) and an internal male member (7) which is located within this socket (6) and is in the form of a T and, by virtue of its dimensions and its shape, is capable of cooperating with a female member (3) of another unit and is capable of being separated to allow the assembly member (5) to cooperate with a male member (2) of another unit (1).

2. Grating consisting of normal units (1) of plastics material, which are flat and of rectangular form, interconnected by male members (2) and female members (3) of dovetail form arranged at the sides thereof, and also of access-ramp forming inclined units (4), and including an assembly system according to Claim 1, characterised in that each inclined element (4) has, on each of its two sloping sides and on its highest side, at least one assembly member (5) formed by a dovetail socket (6) containing an internal male member (7) in the form of a T which is demountably connected to the base of this socket (6).

**Ansprüche**

1. Schwalbenschwanz-Verbindungssystem für polygonale Kunststoffelemente (1), an deren einer Seite sich schwalbenschwanzförmige Vorsprünge (2), und an deren anderer Seite sich schwalbenschwanzförmige Einbuchtungen (3) befinden, dadurch gekennzeichnet, daß bestimmte Elemente (4) mindestens ein Verbindungsteil (5) aufweisen, das eine schwalbenschwanzförmige Aussparung (6) und einen innerhalb derselben angeordneten T-förmigen Vorsprung (7) umfaßt, der dank seiner Abmessungen und seines Umrisses mit einer Einbuchtung (3) eines anderen Elementes zusammenwirken kann und abtrennbar ist, um ein Zusammenwirken des Verbindungsteils mit einem Vorsprung (2) eines anderen Elementes (1) zu gestatten.

2. Stabrost, bestehend einerseits aus normalen, ebenen, rechteckigen Kunststoffelementen (1), die untereinander über an ihren Seiten regelmäßig verteilt angeordnete schwalbenschwanzförmige Vorsprünge (2) und schwalbenschwanzförmige Einbuchtungen (3) verbunden sind, und andererseits aus eine Auffahrtsrampe bildenden Rampenelementen (4) mit einer geneigten Oberfläche, die ein Verbindungssystem nach Anspruch 1 umfassen, dadurch gekennzeichnet, daß jedes Rampenelement (4) an jeder seiner beiden schrägen Seitenflächen und an seiner hohen Seitenfläche mindestens ein Verbindungsteil (5) aufweist, das aus einer schwalbenschwanzförmigen Aussparung (6) besteht, die einen T-förmigen Vorsprung (7) enthält, der mit der Basis dieser Aussparung (6) abreißbar verbunden ist.

FIG.1

FIG.2

FIG.3